# EUROPEAN PATENT SPECIFICATION

(11) **EP 2 016 834 B1**
(45) Date of publication and mention of the grant of the patent: **04.11.2009**
(21) Application number: 07112452.3
(22) Date of filing: 13.07.2007
(51) Int. Cl.: A23D 7/005, A23L 1/30, C12N 1/20

(54) **Food product comprising bacteria and sorbitan fatty acid**
Nahrungsmittel mit Bakterien und Sorbitan-Fettsäure
Produit alimentaire comportant des bactéries et acide gras de sorbitan

(43) Date of publication of application: 21.01.2009
(73) Proprietor: Unilever N.V., 3013 AL Rotterdam (NL); Unilever PLC, London EC4Y 0DY (GB)
(72) Inventor: Garbolino, Chiara, 3133 AT Vlaardingen (NL); Sanders, Jan Willem, 3133 AT Vlaardingen (NL)
(74) Representative: Joppe, Hermina Laura Petronella

(56) References cited:
- DATABASE WPI Week 200424 Derwent Publications Ltd., London, GB; AN 2004-255800 XP002449957 & SG 97 174 A1 (T CELL BIOTECHNOLOGY FOOD CO LTD) 18 July 2003 (2003-07-18)
- DATABASE WPI Week 200551 Derwent Publications Ltd., London, GB; AN 2005-501713 XP002449958 & JP 2005 185237 A (SANEIGEN FFI KK) 14 July 2005 (2005-07-14)

## Description

Nowadays more and more food products are on the market containing probiotics. Probiotic cultures are intended to assist the body's naturally occurring gut microflora to reestablish the gut microflora balance. Claims are made that probiotics strengthen the immune system.

Although the name probiotica is widely used in the art it is defined as a live microbial food supplement that exerts beneficial effect for the host via improvement of the microbiological balance in the intestine (Ziemer and Gibson, Int. Dairy Journal 8 (1998) 473-479). The amount of live bacteria is thus important.

Probiotic bacteria are widely used in chilled dairy products such as yoghurt. Whilst attempts have been made to produce spreads, such as margarine, which contain probiotics, problems have been encountered with bacterial viability and/or product quality. Since, unlike yoghurt which is purchased and consumed within a relatively short period after manufacture, margarine is stored much longer, sometimes even for many months after sale, while being consumed. The long term survival of probiotics in products with a longer shelf-life is a consideration since the product needs to deliver a sufficient dose of live bacteria at the point of consumption. Consequently, significant losses of viable bacteria over several weeks or months need to be avoided.

It is therefore an object of the present invention to have a composition comprising bacteria, wherein the survival rate of the bacteria is increased. It is also an object of the invention to have a food product wherein the survival rate of the bacteria is increased. Another object of the invention is to have a composition comprising bacteria that has a long shelf life, e.g. longer than 4 weeks or even up to 2 to 3 months.

It was surprisingly found that a food product comprising sorbitan fatty acid ester enhances the survival rate of bacteria in the food product.

W02004/065584 discloses storage stable frozen lactic acid bacteria that comprise a cryoprotective agent. Polysacharides are mentioned as a possible cryoprotective agent.

JP-A-2005185237 discloses aqueous turmeric pigment formulations for colouring acidic foods and drinks. SG-A-97174 discloses bacterial isolates of Lactobacillus rhamnosus.

EP1732395 discloses a method for incorporating probiotics in an water-in-oil emulsion by adding the probiotic in a hydrophobic medium to an already formed water-in-oil emulsion.

WO2005/105980 discloses probiotic compositions which enables to maintain effectively physiological activity for a long time comprising a colorant.

WO01/91569 discloses fat-in oil spreads with live bacterial culture and a hydropexic hydrocolloid.

### Detailed description

The present invention concerns a food product comprising live food grade bacterium and sorbitan fatty acid ester, wherein the food product is an emulsion comprising 0.5 to 80 wt% of fat. Sorbitan fatty esters are a class of emulsifiers used in some pharmaceuticals and food preparation. It is often used in cosmetics to solubilise essential oils into water based products. Polysorbates are derived from poly ethylene glycol (PEG)-ylated sorbitan (a derivative of sorbitol), esterified with fatty acids and are often called tween. Surfactants that are esters of plain (non-PEG-ylated) sorbitan with fatty acids are usually referred to by the name Span.

Some examples are Polysorbate 20 (Tween® 20 or Polyoxyethylene (20) sorbitan monolaurate), Polysorbate 40 (Tween® 40 or Polyoxyethylene (20) sorbitan monopalmitate), Polysorbate 60 (Tween® 60 or Polyoxyethylene (20) sorbitan monostearate), Polysorbate 80 (Tween® 80 or Polyoxyethylene (20) sorbitan monooleate). Span 20 (Sorbitan monolaurate) Span 40 (Sorbitan monopalmitate) Span 60 (Sorbitan monostearate) Span 80 (Sorbitan monooleate)

The number 20 following the *polyoxyethylene* part refers to the total number of oxyethylene -(CH₂CH₂O)- groups found in the molecule. The number following the *polysorbate* part is related to the type of fatty acid associated with the polyoxyethylene sorbitan part of the molecule. Monolaurate is indicated by 20, monopalmitate is indicated by 40, monostearate by 60 and monooleate by 80. The same numbering is followed in their Span equivalents (Span 20, Span 40, Span 60 and Span 80).

Tween is also commonly used in culture media. Culture media are specifically designed to grow and culture microorganisms and contain many nutrients. It was however surprisingly found that sorbitan fatty acid ester have an influence on the survival rate of food grade bacteria in food products. Food products do not have the intricate balance of nutrients of culture media and are also used differently. One difference e.g. is that food products are often made or used such that bacterial spoilage is prevented.

Suitably the food product according to the invention comprise sorbitan fatty acid ester is present in an amount of from 0.01 to 2 wt%. More suitably the food product comprise from 0.05 to 1 wt% sorbitan fatty acid ester, most suitably from 0.1 to 0.5 wt%.

Preferred sorbitan fatty acid ester is a polyoxyethylene sorbitan fatty acid ester. More preferably the polyoxyethylene sorbitan fatty acid ester is a Polyoxyethylene (20) sorbitan monooleate, also known as tween80.

Preferred food grade bacteria are *Lactobacillus, Bifidobacterium* and *Streptococcus*.

Preferably the food grade bacterium is a probiotic. Suitably the probiotic bacteria used according to the present invention may be any conventional probiotic bacteria. It is preferred that the probiotic bacteria are selected from genera *Bifidobacterium, Propionibacterium, Enterococcus, Streptococcus, Lactococcus, Bacillus, Pediococcus, Micrococcus, Leuconostoc, Weissella, Oenococcus* and *Lactobacillus*, with *Lactobacillus, Bifidobacterium* and *Streptococcus* being the most preferred.

Suitable types of probiotic bacteria which may be used include; *Bacillus natto, Bifidobacterium adolescentis, B. animalis, B. breve, B. bifidum, B. infantis, B. lactis, B. longum, Enterococcus faecium, Enterococcus faecalis, Escherichia coli, Lactobacillus acidophilus, L. brevis, L. casei, L. delbrueckii, L. fermentum, L. gasseri, L. helveticus, L. johnsonii, L. lactis, L. paracasei, L. plantarum, L. reuteri, L. rhamnosus, L. sakei, L. salivarius, Lactococcus lactis, Lactococcus cremoris, Leuconostoc mesenteroides, Leuconostoc lactis, Pediococcus acidilactici, P. cerevisiae, P. pentosaceus, Propionibacterium freudenreichii, Propionibacterium shermanii* and *Streptococcus salivarius*.

Particular probiotic strains which are suitable according to the present invention are: *Lactobacillus casei shirota, Lactobacillus casei immunitas, Lactobacillus casei DN-114 001, Lactobacillus rhamnosus* GG *(ATCC53103), Lactobacillus reuteri ATCC55730*/*SD2112, Lactobacillus rhamnosus HN001, Lactobacillus plantarum 299v (DSM9843), Lactobacillus johnsonii La1 (I-1225 CNCM), Lactobacillus plantarum WCFS1, Lactobacillus helveticus CP53, Bifidobacterium lactis HN019, Bifidobacterium animalis DN-173010, Bifidobacterium animalis Bb12, Bifidobacterium infantis 35624, Lactobacillus casei 431, Lactobacillus acidophilus NCFM, Lactobacillus reuteri ING1, Lactobacillus salivarius UCC118, Propionibacterium freudenreichii JS, Escherichia coli Nissle 1917*.

It is to be understood that any of the above mentioned bacteria may be genetically modified bacteria or they may be food-grade bacteria commonly used in industrial processes.

Advantageously the emulsion according to the invention comprises an amount of bacterium of 10⁴ to 10¹¹ Colony forming units (Cfu) per gram of product. More preferably 10⁶ to 10⁸ cfu/g.

The skilled person will appreciate that the amount of bacterium depends on the type of bacterium used and the serving size of the composition.

The food product of the present invention is an emulsion having from 0.5 to 80 wt% of fat, suitably from 10 to 60 wt% of fat, or even from 20 to 40 wt% of fat. Preferred emulsions are fat-continuous.

Preferably the food product of the present invention is a spread, yoghurt, mayonnaise.

In another preferred embodiment the food product according to the invention has a water activity a_{w} of at least 0.5. The present invention is particularly suitable for compositions wherein the water activity a_{w} is at least 0.5. In contrast to the present invention, until now many measures for increasing the survival of bacteria are directed to decreasing the water activity of the composition by e.g. drying (spray- or freeze-drying) or freezing the composition. The present invention provides a solution for the survival of food grade bacteria for compositions with a high water activity such as for many food products.

The food product of the present invention may be produced in any known method.

A preferred embodiment encompasses a method for making a food product according to the present invention wherein the dry food grade bacterium is rehydrated in the presence of sorbitan fatty acid ester.

### Examples:

### Measuring viability of probiotics in spreads

Portions of 20g of a spread were melted in 90 ml sterile peptone-physiological salt solution for 20 min at 39°C. Subsequently this mixture was shaken for 10 min. The water phase was diluted further in peptone-physiological salt solution in steps of 10-fold by mixing each time 1 ml of the concentrate into 9ml of sterile peptone-physiological salt solution. Appropriate dilutions were pour plated using MRS as the cultivation agar for *L. reuteri*. Petri dishes were incubated for 2 days under anaerobic conditions at 37°C and plates carrying 30-300 colonies were used for counting the actual number of colonies. The number of live cells per gram of product was calculated, taking into account the dilution steps that were applied, and expressed as the number of colony forming units per gram of product (Cfu/g).

### Example 1: Lactobacillus reuteri in a spread with Polysorbate80

Low fat spreads were prepared using the ingredients as listed in table 1 and standard processing conditions. Freeze dried *L. reuteri* cells were hydrated and mixed into the product. Viability was assessed by plate counting and expressed as the % of the number of cells directly after production. Products were stored at 5°C for 12 weeks and viability was checked. The number of viable cells found over storage was significantly higher in spreads when cells had been hydrated in the presence of Polysorbate in comparison to hydration without Polysorbate. Also the number of viable cells found over storage was higher in spreads containing 0.1% Polysorbate 80, when compared to spreads containing no polysorbate (table 2, 3).

**Table 1: Ingredients for 28 wt% fat spread**

| | |
|---|---|
| Lactobacillus Reuteri (ATCC 55730 or SD2112 or DM 17938) | 7x10⁷ CFU/g |
| hardstock fat interesterified mix of palm oil and palm kernel oil | 11.54 |
| sunflower oil | 15.93 |
| Monoglyceride | 0.42 |
| Polyglycerol polyricinoleate | 0.1 |
| Flavour | 0.06 |
| Beta carotene | 0.0008 |
| Vit A (1.7MIU) | 0.0017 |
| Vit. D3 (1.0MIU) | 0.0003 |
| Water | balance |
| Modified tapioca starch | 4.75 |
| Pig Skin Gelatine | 3 |
| Buttermilk Powder | 1 |
| Emulgold (ex Kerry) | 1 |
| Salt | 0.5 |
| Potassium sorbate | 0.13 |

**Table 2: Survival of L.reuteri in 28% fat spreads over storage for 12 weeks at 5°C. Freeze dried L. reuteri was hydrated with or without Polysorbate 80 before inclusion in a spread either or not containing Polysorbate 80. Survival is expressed as % of the start level.**

| Time (weeks) | 0 | 6 | 12 |
|---|---|---|---|
| Hydration without Polysorbate 80, no polysorbate 80 in spread | 100 | 3.2 | 0.1 |
| Hydration with Polysorbate 80, no polysorbate 80 in spread | 100 | 9.0 | 0.9 |
| Hydration with Polysorbate 80, 0.1% Polysorbate 80 in spread | 100 | 17.2 | 1.7 |

**Table 3: Survival of L.reuteri in 38% fat spread* over storage for 12 weeks at 5°C. Freeze dried L. reuteri was hydrated with or without Polysorbate 80 before inclusion in a spread either or not containing Polysorbate 80. Survival is expressed as % of the start level.**

| Time (weeks) | 0 | 6 | 12 |
|---|---|---|---|
| Hydration without Polysorbate 80, no polysorbate 80 in spread | 100 | 0.6 | 0.1 |
| Hydration with Polysorbate 80, no polysorbate 80 in spread | 100 | 24.3 | 0.6 |
| Hydration with Polysorbate 80, 0.1% Polysorbate 80 in spread | 100 | 35.1 | 2.3 |

| | | | |
|---|---|---|---|
| *Spread contained lecithin 0.2 wt% | | | |

## Claims

1. Food product comprising live food grade bacterium and sorbitan fatty acid ester wherein the food product is an emulsion comprising 0.5 to 80 wt% of fat.

2. Food product according to claim 1 wherein the food grade bacterium is a probiotic.

3. Food product according to claim 1 wherein the food grade bacterium is selected from the genera *Lactobacillus, Bifidobacterium*, or *Streptococcus.*

4. Food product according to any of the previous claims wherein the sorbitan fatty acid ester is present in an amount of from 0.01 to 2 wt%.

5. Food product according to any of the previous claims wherein the sorbitan fatty acid ester is a polyoxyethylene sorbitan fatty acid ester.

6. Food product according to claim 5 wherein the polyoxyethylene sorbitan fatty acid ester is a Polyoxyethylene (20) sorbitan monooleate.

7. Food product according to any of the previous claims wherein the amount of bacterium is 10⁵ to 10¹¹ Colony forming units (Cfu) per gram of product.

8. Food product according to any of the previous claims wherein the food product is a spread, yoghurt, mayonnaise or beverage.

9. Food product according to any of the previous claims wherein the food product has a water activity a_{w} of at least 0.5.

10. Method for making a food product according to any of the previous claims wherein the food grade bacterium is rehydrated in the presence of sorbitan fatty acid ester.

## Patentansprüche

1. Nahrungsmittelprodukt, das lebendes, für Nahrungsmittel geeignetes Bakterium und Sorbitanfettsäureester umfasst, wobei das Nahrungsmittelprodukt eine Emulsion ist, die 0,5 bis 80 Gewichts-% Fett umfasst.

2. Nahrungsmittelprodukt gemäß Anspruch 1, wobei das für Nahrungsmittel geeignete Bakterium ein Probioticum ist.

3. Nahrungsmittelprodukt gemäß Anspruch 1, wobei das für Nahrungsmittel geeignete Bakterium aus den Gattungen *Lactobacillus, Bifidobacterium* und *Streptococcus* ausgewählt ist.

4. Nahrungsmittelprodukt gemäß einem der vorangehenden Ansprüche, wobei der Sorbitanfettsäureester in einer Menge von 0,01 bis 2 Gewichts-% vorliegt.

5. Nahrungsmittelprodukt gemäß einem der vorangehenden Ansprüche, wobei der Sorbitanfettsäureester ein Polyoxyethylensorbitanfettsäureester ist.

6. Nahrungsmittelprodukt gemäß Anspruch 5, wobei der Polyoxyethylensorbitanfettsäureester ein Polyoxyethylen (20)-sorbitanmonooleat ist.

7. Nahrungsmittelprodukt gemäß einem der vorangehenden Ansprüche, wobei die Menge an Bakterien 10⁵ bis 10¹¹ Kolonien bildende Einheiten (KbE) pro Gramm Produkt ist.

8. Nahrungsmittelprodukt gemäß einem der vorangehenden Ansprüche, wobei das Nahrungsmittelprodukt ein Aufstrich, ein Jogurt, eine Majonäse oder ein Getränk ist.

9. Nahrungsmittelprodukt gemäß einem der vorangehenden Ansprüche, wobei das Nahrungsmittelprodukt eine Wasseraktivität a_{w} von wenigstens 0,5 hat.

10. Verfahren zur Herstellung eines Nahrungsmittelprodukts gemäß einem der vorangehenden Ansprüche, wobei das für Nahrungsmittel geeignete Bakterium in Gegenwart von Sorbitanfettsäureester rehydratisiert wird.

## Revendications

1. Produit alimentaire comprenant une bactérie vivante de qualité alimentaire et un ester d'acide gras de sorbitane, le produit alimentaire étant une émulsion qui comprend de 0,5 à 80 % en poids de graisse.

2. Produit alimentaire selon la revendication 1, dans lequel la bactérie de qualité alimentaire est un probiotique.

3. Produit alimentaire selon la revendication 1, dans lequel la bactérie de qualité alimentaire est choisie parmi les genres *Lactobacillus, Bifidobacterium*, ou *Streptococcus.*

4. Produit alimentaire selon l'une quelconque des revendications précédentes, dans lequel l'ester d'acide gras de sorbitane est présent en une quantité de 0,01 à 2 % en poids.

5. Produit alimentaire selon l'une quelconque des revendications précédentes, dans lequel l'ester d'acide gras de sorbitane est un ester d'acide gras de polyoxyéthylène sorbitane.

6. Produit alimentaire selon la revendication 5, dans lequel l'ester d'acide gras de polyoxyéthylène sorbitane est un monooléate de polyoxyéthylène (20) sorbitane.

7. Produit alimentaire selon l'une quelconque des revendications précédentes, dans lequel la quantité de bactérie est de 10⁵ à 10¹¹ unités formant colonies (ufc) par gramme de produit.

8. Produit alimentaire selon l'une quelconque des revendications précédentes, dans lequel le produit alimentaire est une pâte à tartiner, un yaourt, de la mayonnaise ou une boisson.

9. Produit alimentaire selon l'une quelconque des revendications précédentes, dans lequel le produit alimentaire a une activité de l'eau a_{w} d'au moins 0,5.

10. Procédé de préparation d'un produit alimentaire selon l'une quelconque des revendications précédentes, dans lequel la bactérie de qualité alimentaire est réhydratée en présence d'ester d'acide gras de sorbitane.
